# FASCICULE DE BREVET EUROPEEN

(11) **EP 0 880 207 B1**
(45) Date de publication et mention de la délivrance du brevet: **24.09.2003**
(21) Numéro de dépôt: 98401215.3
(22) Date de dépôt: 20.05.1998
(51) Int. Cl.: H01S 3/00

(54) **Dispositif de protection d'un système optique contre les surintensités lumineuses.**
Vorrichtung zum Schutz eines optischen Systems gegen überhöhte Lichtleistung
Device for protecting an optical system against light surges

(30) Priorité: 23.05.1997 FR 9706306
(43) Date de publication de la demande: 25.11.1998
(73) Titulaire: AEROSPATIALE MATRA, 75016 Paris (FR)
(72) Inventeur: Hubert-Habart, Christophe, 92190 Meudon (FR); Fournier, Gilles, 78390 Bois d'Arcy (FR)
(74) Mandataire: Bonnetat, Christian

(56) Documents cités:
- WO-A-88/00107
- US-A- 3 602 576
- US-A- 3 734 592
- US-A- 5 153 425
- DICILLO J J ET AL: "POTENTIAL EYE AND SENSOR PROTECTION FROM TUNABLE LASERS BY MEANS OF THIN FILM ALUMINUM MIRRORS" OPTICAL ENGINEERING, vol. 33, no. 3, 1 mars 1994, pages 951-956, XP000434968

## Description

La présente invention concerne un dispositif de protection d'un système optique contre des surintensités lumineuses.

Dans le cadre de la présente invention, on entend par système optique tout moyen naturel, tel qu'un oeil, ou artificiel, tel qu'un capteur optique ou une caméra, susceptible de capter un faisceau lumineux.

On sait qu'en particulier le développement de lasers, tant au niveau des applications civiles que des applications militaires et la diversité des types de lasers existants, notamment en ce qui concerne la longueur d'onde, la durée d'impulsion, l'énergie lumineuse, ..., imposent, pour réaliser une protection efficace d'un tel système optique, l'utilisation de dispositifs de protections spécifiques.

Différentes solutions sont connues pour réaliser de telles protections optiques.

Une première solution connue concerne l'utilisation de filtres de protection, notamment :
- des filtres à bandes de réjection fixes. Toutefois, il est nécessaire dans ce cas de connaître les longueurs d'onde susceptibles d'être rencontrées dans l'environnement considéré et, de plus, de tels filtres perturbent le fonctionnement des capteurs optiques protégés (coloration, faible transmission, ...) et sont généralement inefficaces contre des surintensités polychromatiques ;
- des filtres actifs déclenchés après la détection d'une surintensité lumineuse. De tels filtres présentent des temps de réponse généralement longs et inadaptés à la protection contre des faisceaux lasers pulsés ; ou
- des filtres déclenchés par la surintensité lumineuse et dont le fonctionnement repose sur des effets optiques non linéaires. Ces derniers filtres ne garantissent pas une protection sur une large bande spectrale compatible avec les bandes de fonctionnement de nombreux capteurs optiques.

Cette première solution connue n'est donc guère satisfaisante.

Une seconde solution connue consiste à utiliser un dispositif de protection de type irréversible, c'est-à-dire dont les propriétés optiques sont dégradées de façon irréversible au-dessus d'un seuil d'énergie déterminé du faisceau lumineux incident de manière à empêcher ce dernier d'atteindre alors le système optique à protéger. Une telle solution se justifie par la faible probabilité d'existence de surintensités lumineuses dans un faisceau lumineux observé par un système optique.

Une solution de ce type est décrite dans le brevet américain US-3 602 576 qui divulgue un dispositif de protection comportant :
- des moyens pour former à partir d'un faisceau lumineux incident un premier faisceau lumineux d'observation transmis au système optique et un second faisceau lumineux de destruction précisé ci-dessous ;
- un obturateur photochimique comportant une couche métallique réfléchissante et un explosif susceptible d'être déclenché par un faisceau lumineux qui présente une intensité lumineuse supérieure à une valeur prédéfinie ;
- des premiers moyens optiques pour guider ledit faisceau lumineux d'observation vers ledit système optique après réflexion sur la couche métallique dudit obturateur photochimique ; et
- des seconds moyens optiques pour guider ledit faisceau lumineux de destruction vers ledit explosif dudit obturateur photochimique selon un second trajet optique, le premier trajet optique suivi par ledit faisceau lumineux d'observation jusqu'audit obturateur photochimique étant plus long que ledit second trajet optique.

Ainsi, lorsque le faisceau lumineux incident présente une surintensité lumineuse correspondant par exemple à une impulsion laser, cette dernière se retrouve dans le faisceau de destruction qui déclenche alors ledit explosif détruisant ainsi l'obturateur photochimique et empêchant après la destruction le faisceau d'observation d'atteindre le système optique. De plus, comme le trajet optique du faisceau de destruction est plus court que celui du faisceau d'observation (jusqu'à l'obturateur photochimique), le déclenchement de la destruction de l'obturateur est antérieur à l'arrivée du faisceau d'observation correspondant sur ce dernier.

Toutefois, en raison de la durée importante entre l'arrivée du faisceau de destruction et l'explosion elle-même, une telle solution est tout à fait inefficace pour les applications envisagées dans la présente invention, notamment pour la protection contre des lasers de durées d'impulsion courtes inférieures à la milliseconde, puisque le faisceau d'observation présentant la surintensité lumineuse atteint dans ce cas quand même toujours le système optique et de plus suffisamment longtemps pour l'endommager ou le détruire, avant ladite explosion et l'interruption de son trajet.

De plus, l'explosion dudit obturateur photochimique risque d'endommager très fortement les autres éléments du dispositif de protection et même ledit système optique.

Cette seconde solution n'est donc pas satisfaisante, non plus.

La demande internationale PCT WO 88/00107 décrit un dispositif de protection optique contre les surintensités d'un faisceau, ayant pour principe l'ablation, localisée, de la couche réfléchissante d'un miroir par le seul faisceau d'observation lorsque l'intensité de celui-ci atteint un seuil.

La présente invention a pour objet de remédier à ces inconvénients. Elle concerne un dispositif simple, efficace et de coût réduit, pour protéger un système optique contre des surintensités lumineuses d'un faisceau lumineux incident, et notamment d'un laser de courte durée d'impulsion.

A cet effet, selon l'invention, ledit dispositif du type comportant :
- des moyens pour former à partir dudit faisceau lumineux incident un premier et un second faisceaux lumineux ;
- un moyen de réflexion optique comprennant un miroir comportant une couche réfléchissante;
- des premiers moyens optiques pour guider ledit premier faisceau lumineux vers ledit système optique après réflexion sur ledit moyen de réflexion ; et
- des seconds moyens optiques pour guider ledit second faisceau lumineux vers ledit moyen de réflexion selon un second trajet optique, le premier trajet optique suivi par ledit premier faisceau lumineux jusqu'audit moyen de réflexion étant plus long que ledit second trajet optique,
est remarquable en ce que la couche réfléchissante dudit moyen de réflexion optique est susceptible d'être ablatée au moins localement lorsqu'elle est soumise à une intensité lumineuse supérieure à une valeur prédéfinie, et en ce que lesdits premiers et seconds moyens optiques focalisent respectivement lesdits premier et second faisceaux lumineux sur un même point de focalisation de ladite couche réfléchissante dudit miroir et forment des premier et second trajets présentant une différence de longueur telle que, lorsque ledit faisceau lumineux incident présente une surintensité lumineuse, ledit second faisceau lumineux amorce l'ablation de ladite couche réfléchissante audit point de focalisation, ladite ablation étant. poursuivie et achevée par l'action conjuguée desdits premier et second faisceaux lumineux.

Ainsi, grâce :
- d'une part, à l'utilisation dudit miroir, dont la couche réfléchissante peut être ablatée extrêmement rapidement, surtout par rapport au temps de réponse de l'obturateur photochimique précité ; et
- d'autre part, au mode de destruction préconisé combinant l'action des deux faisceaux lumineux, à savoir l'amorçage de l'ablation par le second faisceau et la poursuite et l'achèvement de ladite ablation par les deux faisceaux associés,
on remédie efficacement aux problèmes de durée d'activation de la protection, existant dans le dispositif divulgué par le brevet US-3 602 576 précité, et on obtient ainsi une protection particulièrement efficace.

En outre, comme on réalise uniquement une ablation de la couche réfléchissante ou d'une partie de celle-ci, il n'existe qu'un risque d'endommagement extrêmement faible des autres éléments dudit dispositif. Ce dernier peut donc être réutilisé, soit tel quel, soit en remplaçant ledit miroir,. soit en le déplaçant lorsque la couche réfléchissante est ablatée uniquement localement.

On notera par ailleurs qu'en plus d'être simple et de coût réduit, le dispositif conforme à l'invention est efficace sur une large bande spectrale, en raison des propriétés correspondantes du miroir utilisé.

Bien qu'un tel miroir soit connu, son utilisation telle quelle, c'est-à-dire sans l'incorporer dans le dispositif conforme à l'invention, ne permet pas d'obtenir les résultats et les avantages obtenus par la présente invention et elle ne peut pas être suffisamment efficace pour les applications envisagées dans la présente invention. En effet, pour des conditions de focalisation identiques, le seuil d'énergie par unité de surface pour ablater la couche métallique du miroir est généralement plus élevé que le seuil d'énergie par unité de surface susceptible d'endommager les systèmes optiques considérés.

La présente invention remédie à ce dernier inconvénient :
- d'une part, en associant les contributions énergétiques des deux faisceaux lumineux ; et
- d'autre part, en focalisant ces faisceaux lumineux sur un même point de focalisation, dans tout le champ optique.

Par conséquent, les caractéristiques de la présente invention permettent à la fois :
- de réduire le temps de réponse de manière à le rendre compatible avec des durées d'impulsion de lasers, très inférieures à la milliseconde ; et
- d'augmenter la sécurité de la protection dudit système optique, d'une part en perfectionnant l'ablation par l'action conjuguée des deux faisceaux lumineux et, d'autre part, en se déclenchant sur un faisceau d'observation présentant une intensité lumineuse réduite, donc moins dangereuse pour le système optique.

De préférence, lesdits premier et second faisceaux lumineux sont émis par des côtés opposés sur le miroir. Dans ce cas, pour réduire la rétrodiffusion du dispositif de protection, de façon avantageuse, ledit miroir comporte du côté de l'émission dudit second faisceau lumineux par rapport à ladite couche réfléchissante, un substrat traité antireflet et/ou une couche absorbante. Cette dernière permet, de plus, d'absorber au moins une partie dudit premier faisceau lumineux après l'ablation de la couche réfléchissante.

De plus, avantageusement, l'axe optique dudit second faisceau lumineux présente une inclinaison par rapport à la normale au plan dudit miroir.

Pour améliorer encore plus la limitation de la rétrodiffusion, cette inclinaison doit être supérieure à la largeur du pic de rétrodiffusion dudit miroir. Généralement, cette largeur est comprise entre 0,3 et 0,5°, la valeur minimale de l'inclinaison sera prise égale à 1°.

Pour maintenir l'efficacité du système de protection dans tout le champ optique, l'inclinaison doit être choisie de manière à ce que le diamètre de la tache de défocalisation en bord de champ soit du même ordre de grandeur que le diamètre de la tache dans le plan focal. La valeur maximale de l'inclinaison dépend des caractéristiques des moyens optiques de focalisation (ouverture numérique, champ, ...).

A titre d'exemple, pour un moyen optique ouvert à f/10, le diamètre de la tache de diffraction est de l'ordre de 10 µm dans le spectre visible. Si le champ image est égal à 1 cm, une inclinaison de 3° donne une tache de défocalisation de diamètre 25 µm qui reste compatible avec les performances du système.

Ainsi, ledit second faisceau lumineux :
- est sensiblement orthogonal au plan du miroir, ce qui permet d'augmenter la concentration d'énergie (nécessaire pour l'ablation) ; mais
- est légèrement incliné par rapport à la normale audit plan, ce qui permet d'augmenter la furtivité du dispositif conforme à l'invention.

En outre, de façon avantageuse, ledit dispositif comporte :
- un moyen pour régler la focalisation desdits premier et second faisceaux lumineux sur ledit point de focalisation, dans tout le champ optique ; et/ou
- un piège à lumière disposé dans le prolongement du second faisceau lumineux du côté opposé au côté d'émission dudit second faisceau lumineux, par rapport audit miroir.

Par ailleurs, pour augmenter davantage encore la sécurité de la protection, avantageusement, lesdits premiers moyens optiques comportent un miroir auxiliaire qui est agencé sur ledit premier trajet optique, en amont dudit miroir dans le sens de déplacement dudit premier faisceau lumineux et qui comporte une couche réfléchissante susceptible d'être ablatée, lorsqu'elle est soumise à une intensité lumineuse supérieure à une valeur prédéfinie.

Les figures du dessin annexé feront bien comprendre comment l'invention peut être réalisée. Sur ces figures, des références identiques désignent des éléments semblables.

La figure 1 illustre schématiquement un dispositif conforme à l'invention.

La figure 2 illustre schématiquement un miroir d'un dispositif conforme à l'invention.

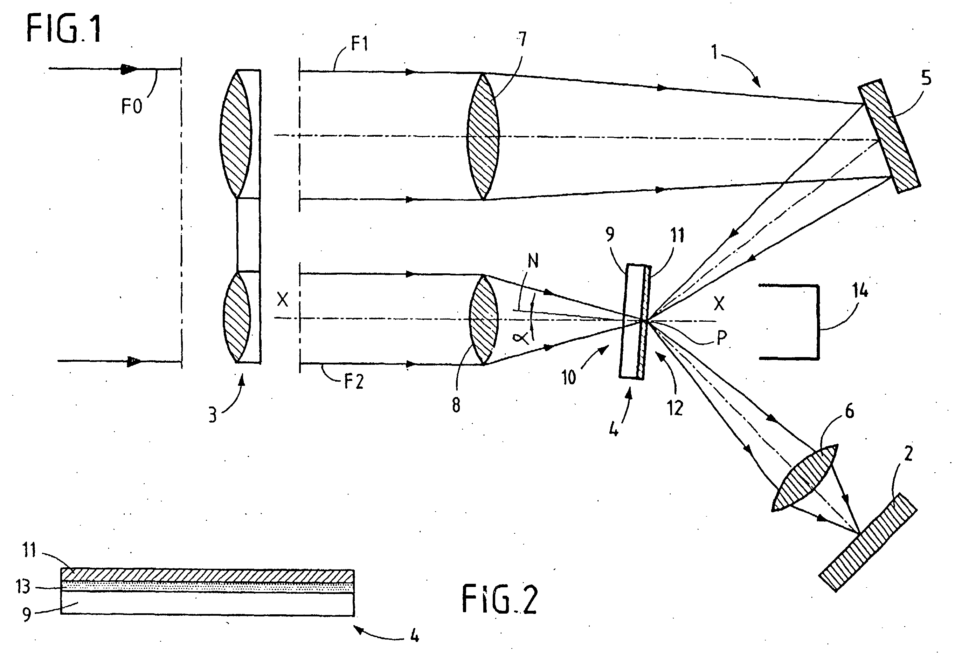

Le dispositif 1 conforme à l'invention et représenté schématiquement sur la figure 1 est destiné à protéger un système optique 2, par exemple un capteur optique ou un oeil d'un observateur, contre des surintensités lumineuses d'un faisceau lumineux incident FO. De telles surintensités lumineuses peuvent notamment être engendrées par une source laser.

A cet effet, ledit dispositif est du type comportant :
- des moyens 3 de type connu, de préférence deux pupilles adjacentes séparées, pour former à partir du faisceau lumineux incident FO, un faisceau lumineux F1 et un faisceau lumineux F2 ;
- un miroir 4 précisé ci-dessous ; et
- un miroir 5 agencé sur le trajet optique du faisceau lumineux F1 pour guider ce dernier sur ledit miroir 4 où il est réfléchi, puis focalisé par un moyen de focalisation 6 sur le système optique 2.

Selon l'invention, ledit dispositif 1 comporte de plus :
- un moyen de focalisation 7 pour focaliser ledit faisceau lumineux F1 sur un point P du miroir 4 ; et
- un moyen de focalisation 8 pour focaliser directement le faisceau lumineux F2, également sur ledit point P et de plus avec le même grandissement.

De plus, selon l'invention, ledit miroir 4 comporte, tel que représenté sur la figure 2, un substrat transparent 9 du côté 10 du faisceau F2 et une couche réfléchissante 11 du côté 12 du faisceau F1. Ladite couche réfléchissante 11 de préférence métallique, par exemple en aluminium, est susceptible d'être ablatée lorsqu'elle est soumise à un faisceau lumineux présentant une intensité supérieure à une valeur prédéfinie.

Ainsi, en fonctionnement normal, le faisceau lumineux F1 issu du faisceau incident FO est transmis au système optique 2 par l'intermédiaire des moyens de focalisation 6 et 7 et des miroirs 4 et 5. La transmission n'est pas perturbée (faible distorsion) et elle peut être réalisée sur une large bande spectrale, notamment en raison des propriétés optiques des moyens 4 à 7 utilisés.

Toutefois, lorsque ledit faisceau incident FO présente une surintensité lumineuse, due par exemple à une source laser et susceptible d'être dommageable pour le système optique 2, cette surintensité également présente dans les faisceaux F1 et F2 provoque l'ablation de la couche réfléchissante 11 au moins localement autour du point P, ce qui empêche alors le faisceau F1 d'atteindre le système optique 2 qui est ainsi protégé.

Comme, selon l'invention, le trajet du. faisceau F2 pour atteindre le miroir 4 est plus court que celui du faisceau F1, ledit faisceau F2 amorce l'ablation qui est ensuite poursuivie et achevée par l'action conjuguée des deux faisceaux F1 et F2.

Ainsi, grâce à l'invention, on obtient une protection :
- efficace, puisque le temps de réponse est réduit notamment grâce aux caractéristiques du miroir 4 et à l'amorçage de l'ablation par le faisceau F2 ; et
- sûre, puisque l'ablation est réalisée par l'action conjuguée des deux faisceaux F1 et F2 qui sont focalisés au même point P.

Le dispositif 1 comporte de plus un moyen de réglage de faisceau F2 non représenté, par exemple un système à prismes, pour harmoniser la focalisation des deux faisceaux F1 et F2 sur le point P.

De plus, ledit dispositif 1 est de réalisation simple et facile et de coût réduit.

En outre, pour éviter la rétrodiffusion du faisceau F2 en fonctionnement normal, le miroir 4 comporte de plus une couche absorbante 13 agencée entre le substrat 9 et la couche réfléchissante 11, et ledit substrat 9 est traité antireflet.

De plus, dans le même but, l'axe optique X-X du faisceau F2 est incliné d'un angle α par rapport à la normale N au plan du miroir 4.

Toutefois, cet angle α est. faible et est de préférence compris entre 1 et 10 degrés pour améliorer la concentration d'énergie lumineuse au point P, destinée à l'ablation de la couche réfléchissante 11.

Pour augmenter davantage encore la furtivité du dispositif 1, on peut de plus rendre opaque une partie de la pupille de la voie optique du faisceau F2.

Par ailleurs, le dispositif 1 comporte un piège à lumière 14 centré sur l'axe optique X-X du faisceau F2 et agencé du côté 12 du miroir 4.

Ainsi, lorsque le miroir 4 est ablatée au moins localement, le faisceau F2 qui le traverse alors est récupéré par ledit piège à lumière 14, de manière notamment à protéger le système optique 2. On notera que, dans ce cas, le faisceau F1 est au moins partiellement absorbé par la couche absorbante 13 du miroir 4.

Bien que le dispositif 1 soit du type irréversible, il peut être facilement remis en état de fonctionnement normal après une ablation de la couche réfléchissante 11 :
- soit en remplaçant le miroir 4 par un nouveau miroir ;
- soit en le déplaçant dans son plan, lorsque l'ablation est localisée à une petite zone de couche réfléchissante 11.

Pour augmenter davantage encore la protection, le miroir 5 comporte également une couche réfléchissante susceptible d'être ablatée, lorsqu'elle est soumise à une intensité lumineuse supérieure à une valeur prédéfinie.

On notera que :
- si la couche réfléchissante du miroir 5 est identique à celle du miroir 4, elle est ablatée pour des énergies plus élevées, car elle n'est soumise qu'au faisceau F1 qui de plus n'est pas focalisé sur ledit miroir 5 ; et
- le matériau et l'épaisseur des couches réfléchissantes desdits miroirs 4 et 5 sont choisis notamment en fonction de la qualité de la transmission optique recherchée et surtout du seuil d'énergie, à partir duquel la protection (l'ablation) doit être déclenchée.

Bien entendu, le dispositif 1 conforme à l'invention peut être utilisé tel quel et dans de nombreuses applications possibles. Il peut, toutefois, aussi être utilisé en association avec d'autres moyens connus de protection optique.

## Revendications

1. Dispositif de protection d'un système optique (2) contre des surintensités lumineuses d'un faisceau lumineux incident (FO) d'une durée d'impulsion inférieure à la milliseconde, ledit dispositif (1) comportant :
- des moyens (3) pour former à partir dudit faisceau lumineux incident (FO) un premier et un second faisceaux lumineux (F1, F2) ;
- un moyen de réflexion optique (4) comprenant un miroir comportant une couche réfléchissante (11);
- des premiers moyens optiques (5, 7) pour guider ledit premier faisceau lumineux (F1) vers ledit système optique (2) après réflexion sur ledit moyen de réflexion (4) ; et
- des seconds moyens optiques (8) pour guider ledit second faisceau lumineux (F2) vers ledit moyen de réflexion (4) selon un second trajet optique et le focaliser sur un point de focalisation (P) de ladite couche réfléchissante (11) dudit miroir dudit moyen de réflexion (4), le premier trajet optique suivi par ledit premier faisceau lumineux (F1) jusqu'audit moyen de réflexion (4) étant plus long que ledit second trajet optique,
**caractérisé en ce que** ladite couche réfléchissante (11) du miroir (4) est susceptible d'être ablatée au moins localement lorsqu'elle est soumise à une intensité lumineuse supérieure à une valeur prédéfinie, et **en ce que** lesdits premiers moyens optiques (7) focalisent ledit premier faisceau lumineux (F1) sur ledit point de focalisation (P) de ladite couche réfléchissante (11) dudit miroir (4) et lesdits premier et second faisceaux lumineux (F1, F2) forment des premier et second trajets présentant une différence de longueur telle que, lorsque ledit faisceau lumineux incident (FO) présente une surintensité lumineuse, ledit second faisceau lumineux (F2) amorce l'ablation de ladite couche réfléchissante (11) audit point de focalisation (P), ladite ablation étant poursuivie et achevée par l'action conjuguée desdits premier et second faisceaux lumineux (F1, F2).

2. Dispositif selon la revendication 1,
**caractérisé en ce que** lesdits premier et second faisceaux lumineux (F1, F2) sont émis par des côtés opposés (10, 12) sur le miroir (4), et **en ce que** ledit miroir (4) comporte une couche absorbante (13) agencée du côté de l'émission dudit second faisceau lumineux (F2) par rapport à ladite couche réfléchissante (11).

3. Dispositif selon l'une des revendications 1 ou 2,
**caractérisé en ce que** lesdits premier et second faisceaux lumineux (F1, F2) sont émis par des côtés opposés (10, 12) sur le miroir (4), et **en ce que** ledit miroir (4) comporte un substrat traité antireflet (19) agencé du côté de l'émission dudit second faisceau lumineux (F2) par rapport à ladite couche réfléchissante (11).

4. Dispositif selon l'une quelconque des revendications précédentes,
**caractérisé en ce que** l'axe optique (X-X) dudit second faisceau lumineux (F2) présente une inclinaison (α) comprise entre 1 et 10 degrés, par rapport à la normale (N) au plan dudit miroir (4).

5. Dispositif selon l'une quelconque des revendications précédentes,
**caractérisé en ce qu'**il comporte un moyen pour régler la focalisation desdits premier et second faisceaux lumineux (F1, F2) sur ledit point de focalisation (P).

6. Dispositif selon l'une quelconque des revendications précédentes,
**caractérisé en ce qu'**il comporte un piège à lumière (14) disposé dans le prolongement du second faisceau lumineux (F2) du côté (12) opposé au côté (10) d'émission dudit second faisceau lumineux (F2), par rapport audit miroir (4).

7. Dispositif selon l'une quelconque des revendications précédentes,
**caractérisé en ce que** lesdits premiers moyens optiques comportent un miroir auxiliaire (5) qui est agencé sur ledit premier trajet optique, en amont dudit miroir (4) dans le sens de déplacement dudit premier faisceau lumineux (F1) et qui comporte une couche réfléchissante susceptible d'être ablatée, lorsqu'elle est soumise à une intensité lumineuse supérieure à une valeur prédéfinie.

## Patentansprüche

1. Vorrichtung zum Schutz eines optischen Systems (2) vor überhöhter Lichtleistung eines auftreffenden Lichtbündels (FO) mit einer Impulsdauer von weniger als einer Millisekunde, die Folgendes umfasst:
- Mittel (3), um aus dem auftreffenden Lichtbündel (FO) ein erstes und ein zweites Lichtbündel (F1, F2) zu bilden;
- ein Mittel zur optischen Reflexion (4), das einen Spiegel umfasst, der eine reflektierende Schicht (11) besitzt;
- erste optische Mittel (5, 7), um das erste Lichtbündel (F1) nach Reflexion am Reflexionsmittel (4) zum optischen System (2) zu leiten; und
- zweite optische Mittel (8), um das zweite Lichtbündel (F2) entlang einer zweiten optischen Bahn zum Reflexionsmittel (4) zu leiten und es in einem Fokussierungspunkt (P) der genannten reflektierenden Schicht (11) des Spiegels des genannten Reflexionsmittels (4) zu fokussieren, wobei die erste optische Bahn, der das erste Lichtbündel (F1) bis zum Reflexionsmittel (4) folgt, länger ist als die zweite optische Bahn,
**dadurch gekennzeichnet, dass** die reflektierende Schicht (11) des Spiegels (4) zumindest örtlich abgeschmolzen werden kann, wenn sie einer Lichtleistung ausgesetzt ist, die über einem vorher festgelegten Wert liegt, sowie dadurch, dass die ersten optischen Mittel (7) das erste Lichtbündel (F1) im Fokussierungspunkt (P) der reflektierenden Schicht (11) des Spiegels (4) fokussieren und das erste und das zweite Lichtbündel (F1, F2) eine erste und eine zweite Bahn bilden, die einen solchen Längenunterschied besitzen, dass das zweite Lichtbündel (F2), wenn das auftreffende Lichtbündel (FO) eine überhöhte Lichtleistung aufweist, das Abschmelzen der reflektierenden Schicht (11) am genannten Fokussierungspunkt (P) auslöst, wobei das Abschmelzen durch das gemeinsame Wirken des ersten und des zweiten Lichtbündels (F1, F2) fortgesetzt und abgeschlossen wird.

2. Vorrichtung nach Anspruch 1,
**dadurch gekennzeichnet, dass** das erste und das zweite Lichtbündel (F1, F2) von gegenüberliegenden Seiten (10, 12) auf dem Spiegel (4) ausgestrahlt werden und dadurch, dass der Spiegel (4) eine Absorptionsschicht (13) umfasst, die auf der Ausstrahlungsseite des zweiten Lichtbündels (F2) in Bezug auf die reflektierende Schicht (11) angeordnet ist.

3. Vorrichtung nach einem der Ansprüche 1 oder 2, **dadurch gekennzeichnet, dass** das erste Lichtbündel und das zweite Lichtbündel (F1, F2) von gegenüberliegenden Seiten (10, 12) auf dem Spiegel (4) ausgestrahlt werden und dadurch, dass der Spiegel (4) eine entspiegelte Unterschicht (19) umfasst, die auf der Ausstrahlungsseite des zweiten Lichtbündels (F2) in Bezug auf die reflektierende Schicht (11) angeordnet ist.

4. Vorrichtung nach irgendeinem der vorstehenden Ansprüche,
**dadurch gekennzeichnet, dass** die optische Achse (X-X) des zweiten Lichtbündels (F2) in der Ebene des Spiegels (4) eine Neigung (α) in Bezug auf die Senkrechte (N) besitzt, die zwischen 1 und 10 Grad liegt.

5. Vorrichtung nach irgendeinem der vorstehenden Ansprüche,
**dadurch gekennzeichnet, dass** sie ein Mittel zur Einstellung der Fokussierung des ersten und des zweiten Lichtbündels (F1, F2) auf den Fokussierungspunkt (P) besitzt.

6. Vorrichtung nach irgendeinem der vorstehenden Ansprüche,
**dadurch gekennzeichnet, dass** sie eine Lichtfalle (14) umfasst, die in der Verlängerung des zweiten Lichtbündels (F2) auf der der Ausstrahlungsseite (10) des zweiten Lichtbündels (F2) in Bezug auf den Spiegel (4) gegenüberliegenden Seite (12) angeordnet ist.

7. Vorrichtung nach irgendeinem der vorstehenden Ansprüche,
**dadurch gekennzeichnet, dass** die ersten optischen Mittel einen Hilfsspiegel (5) umfassen, der auf der ersten optischen Bahn vor dem Spiegel (4) in Bewegungsrichtung des ersten Lichtbündels (F1) angeordnet ist und der eine reflektierende Schicht besitzt, die abgeschmolzen werden kann, wenn sie einer Lichtleistung ausgesetzt wird, die über einem vorher festgelegten Wert liegt.

## Claims

1. Device for protecting an optical system (2) against excess illuminosity of an incident light beam (FO) with a pulse duration shorter than a millisecond, said device (1) comprising:
- means (3) for forming a first and a second light beam (F1, F2) from said incident light beam (FO);
- an optical reflection means (4) consisting of a mirror comprising a reflecting layer (11);
- first optical means (5, 7) for guiding said first light beam (F1) toward said optical system (2) after reflection on said reflection means (4); and
- second optical means (8) for guiding said second light beam (F2) toward said reflection means (4) along a second optical path and focusing it on a focusing point (P) of said reflecting layer (11) of said mirror of said reflection means (4), the first optical path followed by said first light beam (F1) to said reflection means (4) being longer than said second optical path,
**characterized in that** said reflecting layer (11) of the mirror (4) is capable of being ablated at least locally when it is subjected to a luminous intensity higher than a predefined value, and **in that** said first optical means (7) focus said first light beam (F1) on said focusing point (P) of said reflecting layer (11) of said mirror (4) and said first and second light beams (F1, F2) form first and second paths having a length difference such that, when said incident light beam (FO) has excess luminosity, said second light beam (F2) initiates ablation of said reflecting layer (11) at said focusing point (P), said ablation being continued and completed by the combined action of said first and second light beams (F1, F2).

2. Device according to Claim 1, **characterized in that** said first and second light beams (F1, F2) are emitted from opposite sides (10, 12) onto the mirror (4), and **in that** said mirror (4) comprises an absorbing layer (13) arranged on the emission side of said second light beam (F2) relative to said reflecting layer (11).

3. Device according to Claim 1 or 2, **characterized in that** said first and second light beams (F1, F2) are emitted from opposite sides (10, 12) onto the mirror (4), and **in that** said mirror (4) comprises an antireflection-treated substrate (19) arranged on the emission side of said second light beam (F2) relative to said reflecting layer (11).

4. Device according to any one of the preceding claims, **characterized in that** the optical axis (X-X) of said second light beam (F2) has an inclination (α) between 1 and 10° relative to the normal (N) to the plane of said mirror (4).

5. Device according to any one of the preceding claims, **characterized in that** it comprises a means for adjusting the focusing of said first and second light beams (F1, F2) onto said focusing point (P).

6. Device according to any one of the preceding claims, **characterized in that** it comprises a light trap (14) arranged in the extension of the second light beam (F2), on the side (12) opposite the emission side (10) of said second light beam (F2), relative to said mirror (4).

7. Device according to any one of the preceding claims, **characterized in that** said first optical means comprise an auxiliary mirror (5) which is arranged on said first optical path, upstream of said mirror (4) in the direction of motion of said first light beam (F1) and which comprises a reflecting layer capable of being ablated, when it is subjected to a luminous intensity higher than a predefined value.
